# EUROPEAN PATENT APPLICATION

(11) **EP 4 592 969 A1**
(43) Date of publication of application: **30.07.2025**
(21) Application number: 24154232.3
(22) Date of filing: 26.01.2024
(51) Int. Cl.: G06V 10/774, G06V 10/82, G06V 10/30, G06V 20/52, G06V 20/70, G06V 40/16, G06V 40/20, G06V 10/42

(54) **SYSTEMATIC SIMILARITY INCREASE OF SYNTHETIC AND REAL-WORLD IMAGING DATA FOR DEVELOPMENT OF COMPUTER VISION MODELS**

(71) Applicant: Koninklijke Philips N.V., 5656 AG Eindhoven (NL)
(72) Inventor: VAN ZON, Cornelis, Eindhoven (NL); MATTHEIJ, Rudolphus, Eindhoven (NL)
(74) Representative: Philips Intellectual Property & Standards

(57) **Abstract**

A System (SYS) and related method for image processing, for use in machine learning. The system may comprise an input interface (IN) via which is receivable synthetically generated image training data as intended input for training a machine learning, ML, model (M). A filter (IF) component capable of applying a filter operation to the synthetically generated image training data to obtained filtered training data. An output interface (OUT) capable of providing the so filtered training data to a machine learning training system (TS) for training the machine learning model based on the filtered training data. the System may help improve performance of a machine learning model trained on such filtered data.

## Description

### FIELD OF THE INVENTION

The invention relates to an image processing system, to a machine learning system deployment system using output provided by the image processing system, a computing arrangement, to related methods, to a computer program element and to a computer readable medium.

### BACKGROUND OF THE INVETION

According to reports by the World Bank, the WHO and others, life expectancy worldwide is ever growing, despite some dips due to higher mortality rates caused by pandemics for example, such as the Spanish flu in the late 1910s, and the very recent Covid 19 pandemic. Whilst there remain differences globally, most can expect to live on into their 70s, in some richer countries even well into their 80s, such as in Japan, some parts of Europe, and the US for example. However, this may pose new challenges, in particular on the health care system in some places that need to cope with an aging population, sometimes coupled with the effects of dropping birth rates, in particular in higher income countries. Hospitals or care homes for the elderly can become overwhelmed. Patients may have to wait a long time before they receive the healthcare they need. This may affect life quality negatively.

The above trend is compounded by fact that at some places there is also a smaller proportion of workforce that faces an increased proportion of those needing care. In an attempt to still provide a consistent level of health care, or care more generally, technology may be employed such as surveillance cameras or other surveillance equipment that allows the small workforce to serve a larger patient population.

Some such imaging set-ups may be coupled to data processing systems, based on machine learning ("ML") models. Such models have been trained on training data. The machine learning models may process the imagery to compute a classification result for example, thus aiding workforce in decision making, such as whether to intervene in an emergency or other adverse events which the ML system concluded is manifest. However, performance of such models largely depends on the size and variation of the training data on which it has been trained. For relatively rare events, such as when patient or resident comes to harm, training data specimens that illustrate such rare events may be hard to come by. Thus, the training data set may not be sufficient to train the model at the required performance level to reliably pick up even such rare events. For example, in the said care home or hospital setting a reliable and robust classification into adverse and non-adverse results may be called for.

In particular, classification errors should be kept at a low proportion or be avoided altogether. A high rate of false positive and/or false negatives can undermine the usefulness of such image-based monitoring or surveillance systems in understaffed hospitals or care homes for example. It is of little, or no use, to receive a large number of false positives where the system concludes there has been an adverse event whereas it was not, and so tie up staff that may have been needed elsewhere. Equally, and arguably even more importantly, false negatives are also undesirable, where the system fails to flag up a real emergency. The unfortunate consequence may be, that those in need may not, or only belatedly so, receive the care and help they had needed.

### SUMMARY OF THE INVENTION

Thus, there may be a need for improving existing computer vision based applications in medical or health care settings or in any other setting. In general, there may be a need for better utility in relation to ML based models.

An object of the present invention is achieved by the subject matter of the independent claims where further embodiments are incorporated in the dependent claims. It should be noted that the following described aspect of the invention equally applies to the machine learning system deployment system using output provided by the image processing system, to the computing arrangement, to the related methods, to the computer program element and to the computer readable medium.

According to a first aspect of the invention there is provided a system for image processing in connection with machine learning (machine learning training preparation system), comprising:
an input interface via which is receivable synthetically generated image training data as intended input for training a machine learning, ML, model;
a filter component capable of applying a filter operation to the synthetically generated image training data to obtained filtered training data;
an output interface capable of providing the so filtered training data to a machine learning training system for training the machine learning model based on the filtered training data.

In other aspect there is provided a machine learning training system capable of training the machine learning model, based on the filtered training data providable by a system above system, in order to obtain a trained machine learning model.

This filtering may be understood as a preparatory filtering, in distinction to deployment/testing filtering as will be explained below in more detail.

In yet another aspect there is provided a machine learning, ML, deployment or testing system, comprising the trained machine leaning model as trainable by the above system, wherein the deployment or testing system is capable of applying deployment/test input data to the trained machine leaning model to obtain deployment/test output data, wherein the deployment/test input data is the result of applying a filter operation by a deployment/test filter on raw data, and wherein the said filter operation corresponds to the filter operation appliable the training preparation system.

In embodiments, the filtering operations is capable to cause an increased level of image structure similarity between the synthetically generated training data and the test or deployment/test data.

In embodiments, the filtering is one of blurring, down-sampling, low-pass filtering.

A goal of the filtering is to remove very fine-grained details from both the training- and deployment data, which makes the training- and deployment data more alike, ie, filters are usually used to enhance a picture, for example by sharpening it by emphasizing edges and contours. However, what is proposed herein is the opposite. A such goal is not to enhance details of a single picture, but make both types of data more alike for better ML performance.

The model may be used for detection of rare events, such as patients/residents falling out of their bed, or other such events that command emergency intervention.

In embodiments, the deployment or test data includes raw data as video footage acquired by a sensor device of a scene.

In embodiments, the deployment or test data includes a representation of a human face or body pose.

In embodiments, a strength of the filtering operation in deployment or testing is adapted to a spatial dimension of a human face or other body part, or to a distance of the said face or body part to the sensor device in claim 5.

In embodiments, the scene is one in a medical or care setting.

In embodiments, the model is of the artificial neural network type.

In embodiments, the model is of the convolutional artificial neural network type.

The model is preferably one of a deep learning architecture, with more than one or more computational layer(s) (hidden layers) arranged in between input layer (where the training, testing or deployment/test data is received) and an output layer where output (eg, result) is provided in training, testing or deployment.

In embodiments, there is provided a computing arrangement comprising any two or more of the systems of any one of the previous aspects and/or embodiments.

In other aspects there are provided methods. Thus, in one aspect there is provided a method of image processing in support of machine learning, comprising:
receiving synthetically generated image training data as intended input for training a machine learning, ML, model;
applying a filter operation to the synthetically generated image training data to obtained filtered training data;
providing the so filtered training data to a machine learning training system for training the machine learning model based on the filtered training data.

In another aspect there is provided a method of training a machine learning model, comprising:
receiving filtered training data providable by the method of image processing in support of machine learning; and
training, based on the filtered training data, the machine learning model, by applying a machine learning training algorithm, in order to obtain a trained machine learning model.

In another aspect there is provided a method of deploying or testing a machine learning model, comprising:
applying deployment or testing input data to the trained machine leaning model as obtainable the training method to obtain deployment or test output data,
wherein the said deployment input data is the result of applying a filter operation by a deployment/test filter on raw data, and wherein the said filter operation correspondable to a filter operation appliable by the method of image processing in support of machine learning.

In yet another aspect there is provided a use of filtered synthetically generated training data for training a model, and then using the model in deployment or testing, for processing data previously filtered in a manner that corresponds to the filtering used through which the filtered synthetically generated training data is obtainable.

In yet another aspect there is provided a computer program element, which, when being executed by at least one processing unit, is adapted to cause the processing unit to perform the any one of the methods.

In yet another aspect there is provided at least one computer readable medium having stored thereon the program element, or having stored thereon the filtered synthesized data for use in ML.

The proposed setup addresses a downside of ML model deployment, in that usually a large and varied amount of training data may be required to train models that are sufficiently performant. This is especially the case for deep learning (DL), a subclass of ML methods, or other ML methods, that use artificial neural networks with plural hidden layers, that are designed to mimic aspects of human learning. While DL is arguably a successful ML method, it relies on the said availability of large amounts of varied training data. This data reliance may pose a challenge if such data is not available, or not in sufficient supply. Obtaining sufficiently large amounts of data in useful variation for ML training purposes may be challenging in the following example situations i) the event of interest occurs infrequently (rare events), and associated data is likewise rare ii) the event may occur frequently, but associated data can somehow not be obtained.

The proposed setup may be used ML/DL for computer vision (CV) applications. Broadly, CV refers to extraction of (high-level) information from still images or video. An example where both of the above two challenges of obtaining large amounts of training data at suitable variation occur is procuring video footage of patients falling out of a hospital bed for example. While such events may occur frequently when considering hospitals in a large enough area collectively, it occurs much less frequently for any given hospital, and less frequently still for any given hospital bed. Thus, an objective may be so to set up a surveillance/monitoring system based on ML CV models, trained on video footage to so enable such models to recognize this particular event ("bed fall event"). But in order to obtain a sufficient number of training samples (eg, training footage) of such bed fall events, , video cameras would need to be placed in many hospital rooms at once, or in fewer rooms but for a longer period of time, etc. This may in itself be inconvenient or unfeasible. But even if this were feasible, which it is not, the collected videos might not be usable because of privacy concerns. Privacy laws and regulations may prohibit the use of visual human subject data, i.e., still and/or moving images (videos) representing individuals, unless these individuals explicitly consented to their data being used for this specific purpose. Such consent is often hard to obtain.

The proposed setup proposes an approach to mitigate the above 'insufficient training data' problem.

In some cases, the said lack of sufficient training data availability for training an ML/DL model for CV purposes may be somewhat addressed by creating synthetic visual training data, ie, artificially created images or videos that resemble reality sufficiently well so they can be used as training data for creating reliable models. Whilst methods of creating synthetic data for ML/DL training purposes are known, the proposed setup addresses the problem that the algorithms/tools used to create synthetic visual data have their own shortcomings, which can lead to some of the synthetic data in the training set not resembling reality well. And such samples my undermine overall model performance it has been found, There may, for example, be imager with artifacts and/or rendering manner that make the imagery appear "sculptured", overelaborated, if not, downright "gingerbread". They may represent scenes in manner that will never be encountered in real life applications, not lest because of the mentioned fabricated artifacts. These imperfections/artifacts in the training data due to fabrications that are unrealistic, can negatively affect the performance of the model trained on such data. Deployment in a real-world setting of such model may not be possible.

Synthetic data can be considered sufficiently realistic for training an ML model when the resulting model behaves *sufficiently similar* to a ground truth model trained on a real-life dataset of comparable size - i.e., when the differences in pertinent performance metrics are within acceptable bounds. However, such an objective model comparison is not possible when there is no real-life data available for creating the ground truth model, which is why synthetic data is needed in the first place, Thus, alternatives may be needed. One option is to use the fact that humans are good at assessing the authenticity of images, so a person could visually inspect the synthetic data and manually remove outliers. The downsides of this approach include that i) outliers may be missed, e.g., because motion tends to mask artifacts in individual video frames, or due to reviewer fatigue; and ii) it is time consuming, given that the dataset may be very large, e.g., in the order of a million images or videos, or more. Another option is to create a *confidence metric* that objectively quantifies the "realness"/"authenticity" of each synthetic data item, which enables automatic removal of outliers, Again, downsides of this include the fact that developing and validating such a metric can itself be very time consuming.

What is proposed herein instead is a different approach: remove unnecessary/artifactual detail from both training data and deployment data in a way that increase similarity of training image data and of deployment image data, thereby improving model performance, whilst preserving the desired behavior.

It should be noted that whilst herein the main focus is made in processing video footage or still imagery for computer vision applications, other types of sensors (Other than imaging sensor) and acquired measurements (other than image data) are not excluded herein. In addition, non-image data may be used in combination with such image data. As used herein, the terms image/imagery refers to (video) footage or still imagery. Having said that, processing of footage is mainly envisaged herein. Footage is capable of capturing events of a dynamic character, and such are of main concern in some embodiments herein.

For the sake of brevity, we will refer herein to "adverse" events as the "rare" events, with the understanding that this is merely for illustration. Thus, in other settings, the non-adverse events may be the rare ones. Thus, everything that is described herein is readily applicable to the case where the non-adverse events are rare. The term "event of interest" is used herein as a general reference to either adverse or non-adverse event, and thus such event of interest may or may not be rare. The terms "rare"/"low probability" event as used herein are interchangeable. Both may relate to cases where statistically, in most given sets of relevant historical data (real measurements, such as video, audio, etc), samples/examples of the event of interest are of low proportion. Whatever constitutes "low" in this connection will vary with use scenario. In general, and for present ML purposes, the proportion is considered low, if the performance of the model trained on such data is low, that is, if the error rate on test data is high and unacceptable for the given domain. Again, the exact quantification of such error rate (*0.1%, 1%, 5%,* etc) may differ from one application scenario to another and can usually be defined by experts in the relevant domain (medical, care, retail, etc), based on domain knowledge.

In general, the term *"machine learning"* includes a computerized arrangement (or module) that implements a machine learning ("ML") algorithm. Some such ML algorithms operate to adjust a machine learning model that is configured to perform ("learn") a task. Other ML operate direct on training data, not necessarily using such as model. This adjusting or updating of the model is called "training". In general task performance by the ML module may improve measurably, with training experience. Training experience may include suitable training data and exposure of the model to such data. Task performance may improve the better the data represents the task to be learned. Training experience helps improve performance if the training data well represents a distribution of examples over which the final system performance is measured. See for example, T. M. Mitchell, "Machine Learning", page 2, section 1.1, page 6 1.2.1, McGraw-Hill, 1997. The performance may be measured by objective tests based on output produced by the model in response to feeding the module with test data. The performance may be defined in terms of a certain error rate to be achieved for the given test data.

The term *"similarity"* as used herein in connection with footage/video/imagery relates to the manner of image-information, overall appearance, and not necessarily to what is being represented. Similarity can be defined in terms of statistical image descriptors, such as spatial frequency distribution, spread over mean, gradients, etc. In addition, and in the present ML context, two sets of image-type (spatial) data or two specimens may be said to be similar, if performance (error rate) of a trained model is within a given threshold for the two sets/specimens. This type of similarity may be referred to as ML-based similarity ("ML-similarity") of sets of imagery/specimens. In this connection, the filtering operations across phases, training and deployment, as used herein may be understood as a similarizer operation, that fosters, facilitates, or causes, such similarity, or that at least increases such similarity as compared prior filtering.

### BRIEF DESCRIPTION OF THE DRAWINGS

Fig. 1 show a schematic block diagram of a computer vision system operable to process acquired imagery of a scene;
Fig. 2 shows characteristics of real world data versus artificially generated training data;
Fig. 3 shows an effect of the proposed computer vision system where an increased level of data similarity is achieved across training and deployment data;
Fig. 4 shows a schematic diagram of a machine learning based system operable in a training phase and deployment phase;
Fig. 5 shows characteristics of a low pass filter as may be used herein in embodiments;
Fig. 6 shows a flow chart of a method of training a machine learning model; and
Fig. 7 shows a flow chart of a method of using a machine learning model in deployment or testing.

### DETAILED DESCRIPTION OF EMBODIMENTS

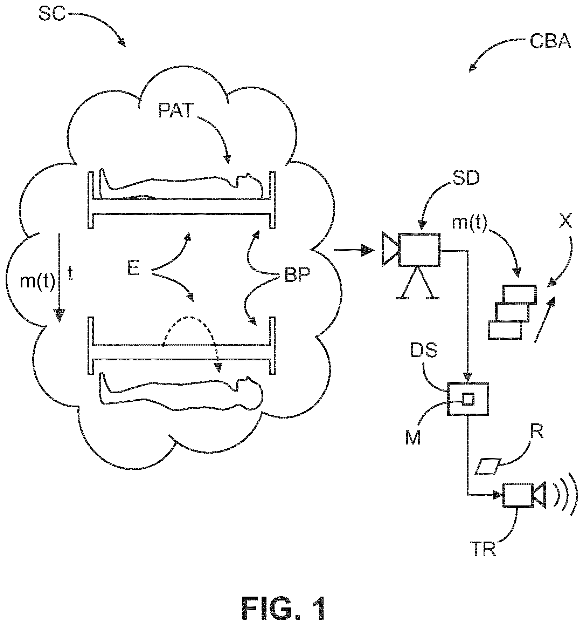

Reference is now made first to the schematic block diagram of Fig. 1 which shows components of a computing-based data processing arrangement CPA as may be used in various settings including medical, care, or other. Broadly, the arrangement is envisaged for computer vision applications, but others are not excluded herein.

A sensor device SD, such as a camera of any kind, optical, infrared, nearly infrared or any other with or without depth channel, acquires imagery of scene SC. The camera may be a video camera. The camera is operable to acquire frames *m(t)* over time, referred to herein as (video) footage for short. Such footage forms input imagery X. Thus, the over time frames *m(t)* as captured by the camera DS form a sequence of snapshots (sub-events) that together, as they unfold, form a scene SC representative of an event E. Thus, such scene SC may represent such an event E. The event may be one of interest. An event of interest may be desirable or not. Broadly, the data processing arrangement CPA is configured herein to monitor the captured imagery X for such event E. Frames are analyzed to yield a decision *R* (eg, a classification result) on whether or not such event E is manifest.

The input imagery X may thus include (video) footage (representative) of the scene SC. The scene may constitute the event E. The input imagery X may be passed through wired, wireless or a hybrid type communication link to a data processing system DS that implements a computer vision algorithm. The data processing system DS processes the received input imagery X. Based on such processing, the result R is obtained.

The data processing system DS may be arranged at least in parts on one or more computing devices, such as on a personal/client/endpoint device (end device), a computer, laptop, desktop computer, smart phone, etc. Alternatively, or instead, some or all of the processing may be implemented in the cloud, in a distributed computing setting, on one or more servers, or in an edge setting, as needed. The computing task of obtaining the result R may be requested through the client device, whilst the computing of the results may be done elsewhere, remotely, such as on the said one or more servers in the cloud/Edge, etc. A thin client paradigm may be used, with the more compute intense workloads run at least partly (eg fully) on the cloud instead of on the thin client, as needed.

Once result R is gotten, this may be one or more of stored, displayed, dispatched or otherwise processed. The result may be dispatched to the client device for notification of user there. Notification of result R may be effected visually (display on a display device), by sound, or in any other way. In some embodiments, the camera device (video camera or still image camera) may be a part of the client device. However, in some main application scenarios envisaged herein, one or more such camera device SD may be installed in respective one or more rooms of a medical setting, such as in hospital wards for example, for patient surveillance to promote safety. Such use in care home settings is also envisaged.

Based on the computed result R, a transducer TD may be operable, to send out an alert signal based on the result R. For example, transducer TD may include an alarm light, a lamp, etc, that flashes or otherwise indicates an alert situation. In addition, or instead, transducer TD may include a communication interface operable to dispatch a message, based on the result, to a recipient, such a device (pager, transponder, phone, or any other endpoint device, etc) of care staff. Thus, based on the result R, staff can be alerted to an emergency situation. A message in whichever form, based on the result R, may be displayed on a display unit of the device. Alternatively, or in addition, an acoustic alert signal is issued.

The result R may be indicative of the emergency or otherwise undesirable situation. Of course, in other settings, the result may be indicative of a desirable, wanted, situation, depending on the exact use scenario and application, as needed.

The computer vision algorithm as implemented by the data processing system DS may be machine learning based. That is, the data processing system DS may use a trained machine learning model M, trained on training data, to compute the result R. In deployment, the model M is applied to the input imagery X to so compute the result R. As will be explored in more detail below, the surveillance system DS, or computer vision system more generally, described herein is configured to produce reliable results R with a low proportion of false positive and false negatives as compared to earlier system designs, even for rare events.

Such a low proportion of false positive and false negatives is in particular desirable in clinical or care settings which often face staff shortage on the one hand, and an ever-growing intake of patients or residents on the other as the population ages. Patients in hospitals or elderlies in care settings may be frail, and undesirable events can happen such as a person (a patient or resident) passing out, falling, or otherwise coming to harm.

For example, as schematically indicated to the left in Fig. 1, a scene may correspond to an event of a patient PAT falling, such as falling off their bed BP, for example during an afternoon nap or during nighttime.

As mentioned earlier, the scene SC is in general represented as a sequence of frames m(t) , and may be captured by the video feed X and that constitute the events, such as the illustrated bed fall. The data processing system DS implements the computer vision algorithm to process the over-time frames m(t) representing the scene SC. The data processing system DS may be operative to decide (classify) whether the observed scene is for example an emergency event that requires intervention by a staff member, such as the said bed fall, or other event that betokens the patient coming to harm. As mentioned, machine learning may be used herein to arrive at the decision. Thus, it is mainly envisaged herein that the machine learning model is configured for a classification type task such as binary (harmful/emergency vs non-harmful/non-emergency), or multi-class , and/or multi-label classification as needed. Having said that, certain regression tasks are not excluded herein. In general, such events of interest may be referred to herein as adverse event (such as the bedfall illustrated in Fig. 1) vs non-adverse events.

Machine learning ML may rely on a large amount of training data set that is presentative of the events of interest among other events. Thus, the training data set should include various samples of such scenes in suitable variation that do and do not represent the events of interest. Having such as varied training data set allows for better training of the model, so it is able to reliably (with low proportion of false positives/false negatives) classify harmful events from those that are not harmful. However, some such adverse events, such as fall events, may be rare events. But when they do happen, intervention is required to prevent the patients coming to further harm. Quick action may be needed when a patient has fallen, in order to avoid sustained brain injury, or to treat fractures for example. Because training data that represents rare events of interest, such as such adverse events, may be hard to come by, there is a danger that the trained machine learning model may not be able to reliably pick-up adverse events. The model may not be able to reliably classify the data for the intended task, thus producing errors (false positives/false negatives).

Thus, in order to increase the proportion of previously rare events samples in the training data for improved performance of the model M, improved training data may instead be artificially generated, often itself by a machine learning model, rather than collecting such data from a stock of existing (historical) real footage for example. For example, reviewing stored historical footage such as may be held by hospitals or care homes may reveal no, or only very few, samples of fall events, most footage being indicative instead of a non-adverse events. But thanks to the data synthesizing, in the improved training data set, there are now more samples, even of the naturally rare events of interest, as compared to such stock of historical data.

Such artificial generation of training data may be done by using a certain class of machine learning models, in particular models of the generative type, such as GANs (generative adversarial network) CGANs (conditional GAN), and others like variational auto-encoders VAE, or diffusion models. Whilst such generative approaches for artificially synthesizing/generating training data (such as footage of rare events) may address the training data paucity situation somewhat, such training data generating approaches have their own shortcomings it has been found herein.

It has been observed for example that training data so generated, in particular by ML models of the generative type, have a rather artificial look and feel. Thus, such generated training may not always be a good representation of reality. What is worse, such artificially generated data may include a abundance of detail which is irrelevant for the task at hand. Such irrelevant information may lead to overfitting effects where the model learns to construct false correlations between such details and classification result. Such overfitting may in turn lead to poor performance of the model, with high error rates.

Before explaining how this training data-based challenge is addressed herein, some concepts of ML are introduced first to ease presentation. Broadly, machine learning models or approaches are generally operable in two phases, in a training phase and in a deployment/test phase. In training phase, the model is trained based on the training data. Such training may include adapting parameters of the model are based on the training data. Training may be one-off or may be repeated as new training data becomes available.

After training, the so trained model may be made available for deployment or for testing. In deployment or testing, new data is put before the system for processing. In testing, the performance is measured, and the model may be re-trained if needed based on the test results. In deployment, the trained model may be used in the intended setting, such as in practical applications in a hospital, medical facility, or in a care home, for example when monitoring footage acquired there for the events of interest. Thus, the deployment/testing data is newly acquired footage that the system has not been exposed to before in training, and yet operates thereon. The expectation is that the produced results in deployment are accurate and reliable, with low error rate.

In particular the deployment data, but at times also the test data, is real world measurement data, such as the footage collected of real scenes by the camera device SD in everyday practice, for example in the care home or hospital setting. It has been found that the deployment data may "look" different from the artificially generated training data it was trained on. In particular, the manner of representation may differ, the image quality may differ. Thus, although the scenes in both, in the artificially generated training data and in the real world deployment data may naturally differ, it is the image quality ("IQ") of representation over and above the represented scenes themselves that has been found to differ. Thus, of concern herein it not (only) what is presented that differs, but how the manner of representation in the different category of data, the artificially generated training data on the one hand, and the measured date in deployment on the other hand, differs. Thus, even if the artificially generated training data and the deployment data were to represent the exact some scene, there may still be difference in the manner the scenes are represented.

Whilst the deployment data are results of measurements of real-world signals collected by detector circuitry of camera SD, the training data is not, but was instead artificially generated. Thus, artificial generated training data based on generative ML models are not, or at least not directly, the result of a physical signal measurements, such as light etc. Thus, the spatial frequency or other representative characteristics, such as IQ statistics, of the ML generated training data may differ from that of the deployment data. It has been found herein that, if not accounted for, such differences in the training vs deployment data may cause lower performance of the so trained models in deployment or testing.

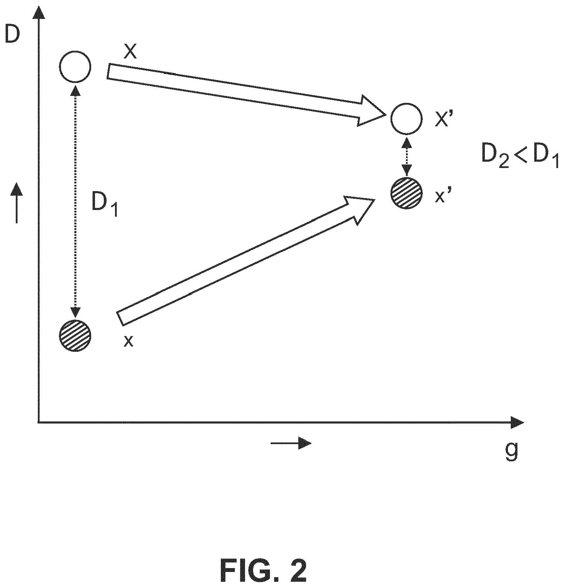

Broadly, as envisaged herein, and as illustrated conceptually in the graph of Fig. 2, the machine learning based system DS is configured herein to act as to make image representation of the real world collected data X and of the training data x more similar. A filtering operation may be used herein to address this representational difference. The (dis-)similarity level Δ, eg in terms of some feature(s), is shown on the vertical axis of the diagram in Fig. 2 whilst the horizontal axis G shows the effect of the filter operation, that is its strength g, such as filter gain as may be applied to the training data x and the deployment data *X*.

The filter operation, or other suitable image processing, acts as a similarizing operation. The similarizing operation as applied to the real world measurement data *X*, and to the training data x, makes the image data representation of both data types *x*,*X* more similar. For convenience, we will refer herein to the similarizing operation as one of a filtering operation, with the understanding that this is an example and not limiting to the principles expounded herein: that is, other image processing operations may be used instead of, or in addition to said filtering, to realize such as a similarizing operation, which may also be called an image-representational-similarity inducing operation.

The filter operation in the example illustrated in the graph of Fig. 2 is represented as two thick arrows. Initially, before application of the filter operation, the similarity is low as indicated by a high dissimilarity Δ1. After filtering, the synthetically generated training data x, now called x' after filtering, and the filtered real world data X' are more similar, with a smaller dissimilarity Δ2, smaller than Δ1 pre-filtering.

Dissimilarity/similarity (we shall use only the term similarity herein), refers to image-representational similarity. Thus, similarity may refer to similarity of image structure. Similarity may be measured by statistical quantities based on spatial frequency found in the imagery, such as standard deviations, or other moments, or indeed any other statistics or quantities otherwise known from image processing.

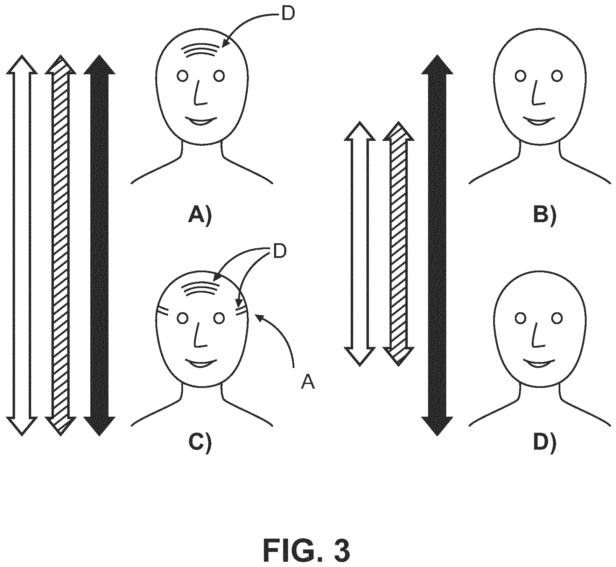

One way of achieving this level of similarity is to artificially blur the training and deployment data. Thus, the filtering operation may be blurring operation. The filtering used on both data types, on the real world deployment data X and the training data x, is preferably similar, or is indeed the same, for improved results. Other approaches such as under-sampling, smoothing, etc, may be done instead of blurring. The filter operation is essentially so that it reduces the level of ornate, unnecessary detail mentioned above and found in particular in training data generated from generative type machine learning models. Such unnecessary detail may also include downright artifacts, which can be removed herein thanks to the filtering. An example for such artifacts in relation to facial imagery as an example will be illustrated below at Fig. 3.

However, such as filtering operation as such may also introduce qualities on its own, which may have undesirable effects. In order to mitigate this, it is proposed then to apply the same filtering operation on the incoming deployment data before it is put through the machine learning model in deployment. Thus, the following, some may say counterintuitive, finding has been established herein: the performance of ML model M can in fact be improved by deliberately degrading the image quality in the deployment data. This IQ degradation may be done to correspond to a prior deliberate image degradation of the training data that was used to train the very model M.

Fig. 3 illustrates the mentioned distinct representational differences, or appearances, of deployment data 3A versus artificially generated training data 3C and the similarity of their respective filtered counterparts 3B,3D as proposed herein.

Fig. 3A is an exemplary rendition of imagery of a human face as may be encountered during deployment, as a result of measurements by the camera DS for example. Some facial details D are visible such as furrows, wrinkles etc. Also nose, mouth and eyes are clearly visible as is a portion of the neck. An artificially generated specimen of training imagery of a patient is shown in Fig. 3C. There are also details, however, but there a more details than in the real-world data 3A. For example, some details shown around the eyes may be in fact artifacts A. Such artifacts A may come about if certain feature within the patient population is prevalent, but does not affect the whole population.

For example, about 60% of the population wears spectacles. This situation may lead machine learning models of the generative type to generate specimens of training data by erroneously extrapolating some such features into representations of patient faces as artifacts *A*. For example, it has been found that particularly the temples of the glasses may fool the generative training data generator in some instances. Temples of glasses are the arms that extend behind the wearer's ears and that pass corners of the eyes, the canthi. The temples may by incorrectly extrapolated and rendered into facial features by some generative ML models when used for training data generation as mentioned above. More specifically, some generative models may thus include, "fabricate", artifacts *A* at around the generated patient's canthi, to erroneously mimic temples and mistakenly take them as features of the human face itself. Thus, some artifacts *A* may look like welts or folds of skin at the canthi that extend away therefrom, towards the ears, just like the temples of glasses would.

Such unnecessary, even more so such spurious artifactual detail *A*, is not required for the task at hand, and can indeed be harmful for model's performance. Thus, such details *A,D* may be reduced by operation of the filtering such as blurring as illustrated in Figs 3B, 3D.

As mentioned, in some cases further facial features, such as nose, eyes, mouth, may be filtered out, leaving empty faces as they may appear from a distance. This is because in situational scene recognition ("SR") as practiced herein in some embodiments, such as bed fall event recognition, what matters there is, that the sequence of overall body poses assumed, motions, etc, and/or limbs remain detectable, as such features are sufficient to establish some types of adverse events. Facial details may not be needed for this.

In Fig. 3, the three double arrows on each side, left and right, illustrate changes in IQ achievable with the proposed filtering. Such IQ may include overall image structure sharpness (light arrow), clarity or distinctiveness of rendering error, such as artifacts A (hatched arrow), clarity or distinctiveness of anatomically true details of the rendered subject (heavy arrow). The filtering of the training and deployment data may cause a drop in overall sharpness level and drop in clarity of representation of artifacts, whilst clarity of anatomically true/relevant-for-the-task details may be maintained. For example, the kernel size (window) for the filtering is selected appropriately, so that it cases leaving relevant objects (of certain dimensions) intact, while filtering out smaller objects (noise, artifacts, unwanted details), either manually or via kernel selection method.

Thus, in the filtered specimens 3B,D unnecessary detail/artifacts are removed or reduced, for example, creases, folds and artificially introduced artifacts such as the artificial temple remnants *A*. However, distinctiveness of anatomically true, more global features, such as eyes, mouth and nose are maintained. The level of details and/or artifacts introduced by generative AI is not required herein because the computer vision pipeline DS mainly envisaged herein is one of situational recognition SR. Whilst the image quality such a clarity and sharpness are reduced (the light and hatched arrows) in the filtered specimens 3B,3D as compared to the unfiltered counterparts 3A,3C, the natural facial features (dark arrow) may remain even after filtering.

Having said that, some computer vision applications, more, or all, such facial details D such a nose, mouth, eyes may be expunged or filtered down, as such facial details may also be irrelevant for some tasks, such as for picking up bed fall events. In such or similar type of computer vision applications, it is not the ascertainment of the person's identity that is sought, but it is the recognition of the overall scene as it is unfolding as an event and as captured as footage X by the video camera that matters. For example, a patient fainting and falling off their bed is a conclusion that may be reached only by processing the broader context of the scene as it is unfolding over multiple frames m(t) and as captured by the camera SD. The patient's facial expressions as captured in the scene may be irrelevant for determining whether this is really an event that may require intervention. Rather it is the broadly exhibited body poses, movements of limbs etc, and their interaction with the environment that may be taken into consideration in order to classify the image into adverse event (eg, a fall event), or non-adverse event. For example, the person may have lied down on the floor for some reason, other than due to a fall. For example, person may "flopped" on the ground to demonstrate to their friend how tired they are, etc. For distinguishing this pretended fall from a real fall event, facial details, but also other details, such folds on clothes, drapings, the detailed rendition of the patient's surroundings, such as the particular configuration of a bed, etc, are not needed for the situational recognition as mainly envisaged herein. In such cases, it is rather the overall body pose, or change thereof, movements of limbs, etc that are the more important clues for correct classification.

In fact, imagery with such overly detailed presentation may mislead the model M in situational recognition type tasks. The model be end up being trained to construct wrong correlations between the classification result sought, and details in the imagery that are irrelevant for the SR task, thus leading to over-fitting, poor generalizability and hence poor overall performance of the model M with high error rates.

Thus, the proposed set-up includes the filtering of deployment and training data in order to make the representational appearances therein more similar. This allows the system to perform better, with lower incidences of false positives and false negatives, in particular in relation to rare events of interest for which the system is supposed to classify for.

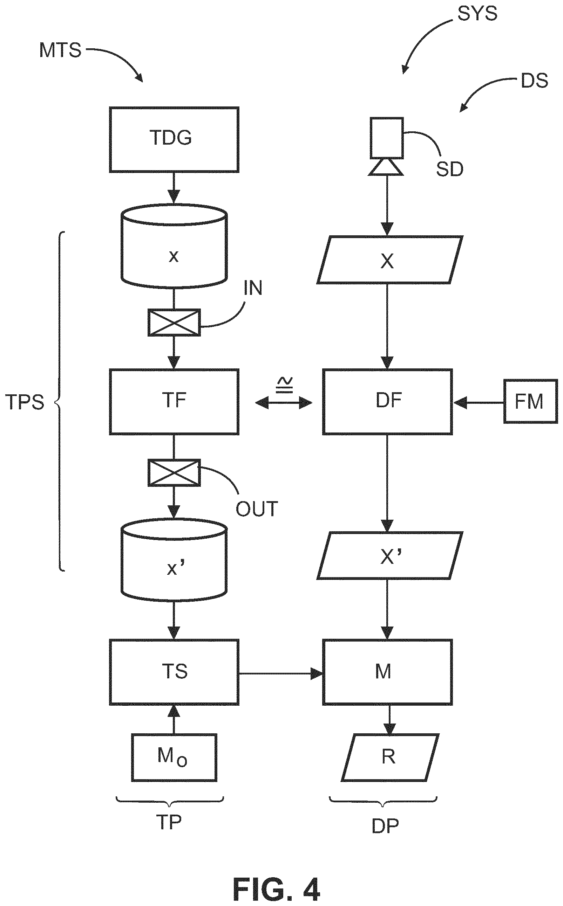

Reference is now made to the flow chart of Fig. 4 which shows components of a machine learning based systems SYS as envisaged herein. Broadly, to the left is shown the machine learning training setup MTS, as opposed to the deployment system DS, shown to the right. The machine learning training setup MTS operates in training phase TP. There may be multiple training phases, one after the other, or a single one. The deployment system DS operates in deployment phase, after training (after a single such training phase, or in between two). If there is testing phase, this happens between training and deployment. The system may switch in and out, possibly repeatedly, between phases. The phases may be interleaved. The phases may run in sequence or at least partly in parallel, once in a break-in-phase sufficient training data is generated, and the model is trained to a first version. The training phase may include training preparation phase before the actual training. In the training preparation phase, the training data may be processed, or prepared, as will be detailed below, before model is trained on such prepared training data. Thus, the training data may be generated in the training preparation phase for use in the later training. After a first training run, the trained model can be used for testing, if needed. After testing, the model may be tweaked/re-trained, or released for use in deployment such as in clinical or care home setting, or other.

Broadly, the system SYS may be operable across the two phases, the mentioned training phase TF and the deployment phase DP.

Turning first to the training phase TP in more detail, this may comprise a training pre-processing system TPS operable in the said training preparation phase.

Broadly, the training pre-processing system TPS may include a training data generator (system) TDG or training data synthesizer, and, downstream thereof, a filter component TF for use in training phase. The training data generator TDG is operable to generate training data x. The training data x is then filtered by the filter component TF to obtained filtered training data x'. The filter component TF implements at least a part of the above mentioned filtering/similarizing operation. The filtered training data x' is then passed to training system TS. Training system TS implements a machine learning algorithm, to trained model based on the filtered data x'. The machine algorithm, such as deep learning algorithms, etc, may be gradient based, such as back propagation based approaches, or others. In such algorithms, parameters of an initial or pre-trained model M0 version are adapted based on the filtered training data x' as supplied by the training pre-processing system TPS. The training at the training system TS may proceed iteratively. The training may proceed over sets of training data (batches). Training may be controlled by an objective function F, such as a loss or utility function. The training data x' = (*x'_{I}, x'_{T}*) may comprise training data input x'_{I}, such as the generated footage or real footage, and optionally and associated target (ground truth) x'_{T}, such as a classification label ("non-adverse"/"adverse"). The training input data is applied to model M to produce training output M(x'_{I}). This may be compared with the associated label x'_{T} Based on a mismatch, as quantified by the objective function F, model parameters θ are adapted. For classification tasks as mainly envisaged herein, the cost function may be based on cross-entropy /logistic regression. The current parameters θ of the model M^{θ} are then adapted, over one or more iterations, to improve the cost function F. The manner in which such adaptation is done depends on the particular of the training algorithm, the model architecture, etc. The model may be an artificial neural network ("NN"), such as a CNN (convolutional neural network) where computational nodes are arranged in cascaded fashion across layers. The nodes carry some or the said parameter, which are adapted in training. Some of the nodes in CNN may implement convolutional filters having parameters, and such parameters are adapted in training. Models other than of the NN type may be used, such as (auto)regressors, decision trees/forests, etc.

Once a stopping condition is met based on cost function output, the currently adapted state of the parameters are considered to be sufficient for the task at hand. Thus, the model so trained (with the current parameters) may be made available for the deployment system DS for use there.

The training data generator system TDG in the training phase may be based itself on generative machine learning models, previously trained (such as a GAN) to produce artificially generated specimens of training data x. This may be used together, or instead of real world data, that may have been collected from medical databases or from footage from existing camera surveillance set-ups across hospitals or care homes. Using such a data generator system TDG in particular of the generative type allow generating a sufficient supply of even low probability /rare event specimen, such as the said bed fall events. Thus, artificially generated patient "avatars" act out fall events to so obtain artificially generated footage of such fall events. Thus, the training data may include historical real world data collected across databases and the artificially generated specimens. The latter may preferably include specimens of rare event, but the historical data set may also include some historical rare events. Thus, overall, with the artificially generated specimens, a varied stock of training data can be compiled that now includes a sufficient proportion of (previously) rare events, which proportion in the so compiled data set is now larger than in most extant historical data stocks. Alternatively, the proportion of rare events is maintained but the overall training data size is increased, so that, whilst still rare in proportion, no larger number of rare event specimen are available in absolute numbers. It may also be possible to compile a training data set that is wholly artificially created/synthesized with a requisite proportion of rare and non-rare events, and overall count sufficiently large.

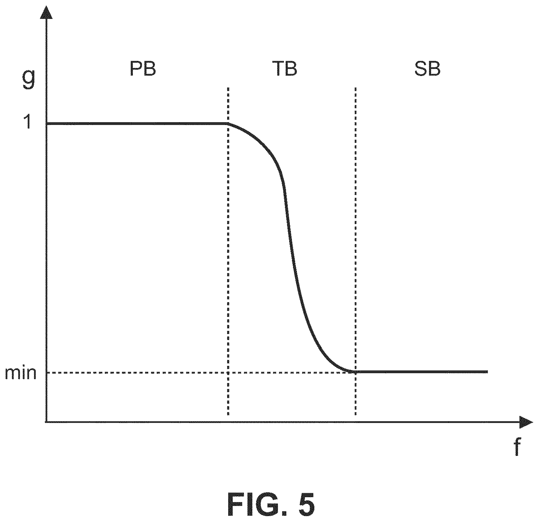

This artificially generated training data, possibly together with some specimens of historical data, may be held as stock of training data x in a database as schematically shown to the left in Fig. 5. The training data x, the historical specimens and the synthesized/artificially ML generated specimens, may be processed by the filter component TF, which may be referred to herein as the in-training filter component TF, as it is used in the training phase. Once the training data x, including artificially generated data, has been filtered, the filtered data x' so obtained may be again stored in the same or in one or more different databases. The stock of so filtered training data x' is then made available for training. Thus, it is (only or predominantly) from this filtered data x', that the model M is then trained by training system TS, as explained above.

Notably, any filtering done by the in-training filter component TF is in addition, over and above, to any filtering/filtering type operations to which the filtered training data may be exposed to in the context of the model on which it is trained. Thus, the in-training filter PF is not adapted by the training algorithm, as opposed to for example the mentioned filter coefficients/parameters of the convolutional filters in neural networks M, which are adapted during the training phase. Thus, the filtering for the purpose of enforcing similarity in data representation as proposed herein by in-training filer TF in pre-training phase, is done outside the training by training system TS, and is done in addition to any filtering operation that may occur within the training of the model, which training includes then adaptation of its parameters. By this separation of filtering for different purposes, the advantages of proposed to set-up SYS can be obtained at its fullest.

Turning now to the deployment phase DS, in which the trained model M is released, trained on the filtered data x', in this subsequent phase DP, the deployment system DS receives measured footage X as supplied by the video camera SD, or by any other imaging or sensor-based measurement arrangement or equipment.

In particular, the deployment data, such as acquired footage X, is fed into the trained model M for processing, but only after the deployment data X itself has been filtered by an in-deployment filter DF into filtered deployment data X'. Thus, as mentioned above, and as envisaged herein, filtering is used in both phases, in the training phase TP and in the deployment phase DP.

Filter characteristics, such as being low pass filter high pass filter, bandpass filter, effecting blurring, or any other effect, are corresponding, for example are similar, or indeed the same across the two filters, in the in-raining filter TF and in the deployment filter DF. For example, any one or more of filter coefficients or kernel size may be corresponding, such as being similar or the same in filters TF, DF.

Once the deployment data has been so filtered, for example to obtain blurred real world data X', it is this filtered data that is then fed into the model M and is processed there. Again, the filtering for the purpose of achieving similarity in representation is done before feeding the data for processing into the model to obtain the result R.

As mentioned, the result R is one of classification into adverse and non-adverse events, such as into the ones explained above where a patient is falling, fainting or otherwise comes to harm, as opposed to events that are not of concern. The proposed set-up is useful for low probability events that may happen relatively rarely, but are of grave consequence and need remedial action. Thus, reliable and robust classification is called for. Again, as in the training phase, the deployment filtering operation is done prior to, and in addition to, any filtering that may occur as a result of processing the filtered data X' by or within the model, such as by convolution filters of a trained CNN model. Thus, the earlier mentioned separation of filtering operations in the training phase carries through into the deployment phase.

The ML result R (eg, a classification result) obtained in the deployment phase may be passed through a communication network to other apparatus or devices for controlling same, such as controlling an acoustic transducer, or by sending through a communication interface a message informing on the occurrence of the event to a recipient communication device, such as of staff or other personnel, or of whoever is in charge and whoever may have an interest in such result R. The result R may be displayed on a display device.

Depending on the application, details in individual images or video frames may or may not be relevant. For example, to detect if there is a patient in a hospital bed, it is not necessary that all fine details of the (synthetic) bed and the (synthetic) patient are realistically rendered. Thus, training images can be low-pass filtered (i.e., blurred) to an extent that some or all pertinent for the task features are preserved, while other unnecessary detail, which is where artifacts are more likely to occur, is removed or attenuated. In order to make the model trained on such post-processed synthetic data better work in deployment, video fed into the deployed model is preferably also low-pass filtered in (largely) the same way as the training data was filtered. This pre-preprocessing may also be done by carefully defocusing of the camera lens or, preferably, by pre-processing the camera video with a software or hardware implemented low-pass filter pipeline DF, prior to feeding it into the deployed model.

Reference is now made to Fig. 5, which shows a pass band PB, transition band TB, and stop band SB of a low pass filter, with gain g over frequency f in filter domain, as may be used herein in embodiments. Thus, the in-training filter TF and/or the deployment filter DF may each use such a low pass filtering. Both filters may correspond, e g both may use the same, or related, filter coefficients, same kernel size, or other filter-specifications, etc.

The exact response or configuration of the filter may be down to the particular characteristics of the application environment. Configuring the filter's TF, DF coefficients/kernel size etc, to be used herein may be done in an experimental phase.

In order to achieve the selective attenuation of some details but not of others as illustrated above by IQ arrows of different length in Fig. 3, the bands of the filters may need to be adjusted accordingly, as may be found by such experimental work.

Note that the earlier mentioned similarizing effect of the filters IF, DF across the training and deployment phase does not imply that training and deployment images will indeed "look" alike. They will not. The deployment data usually differs from the training data. Instead, the said similarity across the two data types, training and deployment, refers to certain in-image IQ characteristics of the training and deployment data. For example, prior to low pass filtering, the synthetic data x, its information in the part of its frequency spectrum corresponding to the stopband of the low pass filter, may contain artifacts and hence may not reliably/realistically represent reality. Low pass filtering may remove this information from the synthetic data. The filtered synthetic data therefore approximates reality, as represented by the low pass filtered deployment data, more closely than the unfiltered synthetic data approximates reality as represented by the unfiltered live data.

By design, the information in the passband of the low pass filter represents the aspects of reality that are relevant for the problem/task the model is meant to be trained for, and the information in the stopband of the low pass filter represents aspects of reality that are irrelevant for the problem/task the model is meant to be trained for. As illustrated in Fig. 5, the passband and stopband of a realistic low pass filter are separated by the transition band. The information in the transition band gradually moves from relevant at the start of the transition band, to irrelevant at its end. The above mentioned experimental work may relate to establishing the stopband range. This may be done by generating a population of synthesized training imagery, identify the artifacts (this can be done by a human reviewer), define in-image neighborhoods around such artifacts sites, and establish image statistics, such as spatial frequency distribution, or other descriptors of image structure. Once these are known, the filter coefficients for TF, DF can be computed to define the stopband, kernel size, etc, and thus the filters TF, DF as such.

In order to better illustrate the aforementioned bands, Fig. 5 is based on a frequency response of a 1-dimensional (1D) low pass filter. But this is merely for illustration, as for the proposed filtering as envisaged herein, preferably 2-dimensional (2D) filtering is used, ie, image filtering is done in both horizontal and vertical in-image direction.

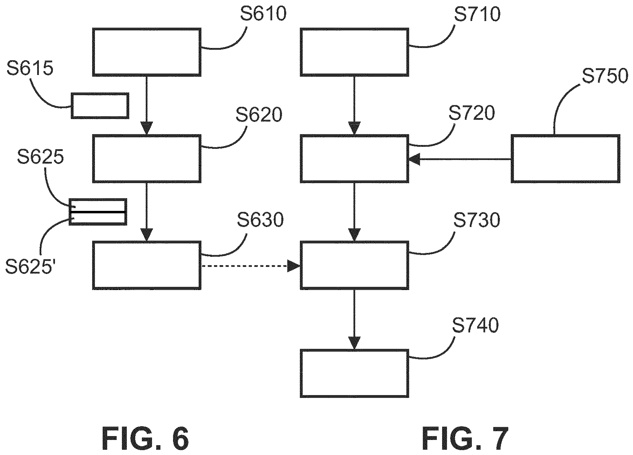

Reference is now made to the flow charts of Figs 6, 7 which shows methods that may be used herein to implement the system SYS described above. However, it will be understood herein that the below described steps of the method are not necessarily tied to the architectures SYS described above, and may be considered herein as a teaching in their own right.

Broadly, Fig. 6 shows a method for ML training phase to obtain a trained ML model M, whilst Fig. 7 to the right shows use of the so trained model in deployment phase, such as for surveillance, monitoring with context/situational recognition SR, as mentioned earlier. Processing of video footage is mainly envisaged herein, but such processing of still imagery, other imagery, or even of non-image data, in addition to, or instead of image data, is also envisaged herein. Preferably the data processed herein includes measurements, such as those collected by a sensor, (camera, etc).

Thus, at step S610 training data x is generated/synthesized, preferably based on ML. Such generating may include use of a trained generative type machine learning model, such as a GAN, cGAN, VAE or any other. The generator may be trained on a relatively small stock of real-world data as may be collected from databases, from existing footage etc. However, the generator, once so trained, is then able to generate a any desired amount of varied training data specimens, including additional specimens of rare events, that were only sparsely represented in low numbers/proportion in the historical stock of data.

GAN type ML models for generation of samples of any kind are described by I Goodfellow at el in " Generative Adversarial Networks", published on ar:Xiv preprint service, under reference arXiv: 1406.2661 [stat.ML], 2014. Inn GAN, a dual model framework is used, comprising two (sub-) models, The two models, commonly called a generator and a discriminator, simultaneously are trained in an adverse pitch, with a specially designed cross-entropy based cost function as detailed in the paper. At one point, after a sufficient number of iterations, a game-theoretical Nash equilibrium is reached, at which point the discriminator is no longer able to distinguish synthetically generated specimens as produced by the generator from (real) historical data. The generator may then be used to continue generate new training data for present purpose. Random seeding maybe used. The discriminator may be discarded.

At step S615, such artificially generated/synthesized training data x is then received and filtered at step S620 such as by a low pass filter, blurring filter, under-sampling, or any other, as needed to produce filtered generated training data. The filtering S630 may also be done to some of the historical data that may be included in the training data set. Thus, the training data set may include original, historical, real-world data, and the synthesized data, but preferably all filtered herein in the same or similar manner.

The filtered data is then made available S625 for model training, and the so filtered data is then received aft step S625' at an ML training system.

The filtered training data set may then be used at step S630 to train a machine learning model, such as for a classification task, so the model leans to distinguish events of interests (eg, adverse vs non-adverse events), such as per footage.

As mentioned above, at step S620 of filtering of training data is distinctly different from the training step S630, as the later may implement an ML algorithm which may include adapting parameters of the model. However, any parameters of the filtering operation S620 are not adapted by the training algorithm step S630. Once sufficiently trained, in one or more iterations, and upon establishing that the objective function, which may be used to drive the training operation, is sufficiently improved, training stops and the model is considered trained.

The so trained ML model is then made available S635 for deployment phase as shown in the flow chart of Fig. 7.

There, at step S710 deployment data, which may include raw data, such as real world by-sensor measurements, such as video footage or camera imagery, is acquired. The so acquired deployment data is then filtered at step S720 using a similar, corresponding filter as was used at step S620 during the training phase as illustrated above in Fig. 6. The filter may be the same as used in step S620 during training phase. The filtering may thus again include blurring or low pass filtering and the filtering may share some or all filter specifications.

The filtered deployment data is then processed at step S730 by the trained machine learning model M to produce the result, such as the classification or regression result at step S740, which result may then be made available for further processing such as controlling equipment, displaying, notifying, messaging, etc, as needed.

The two filtering operations S620, S720 may be said to operate so as to increase or facilitate image similarity across the synthesized training data and the employment data. Said similarity may be statistical and may relate to image structure, overall image features, etc, and not the specifics of what is being represented. The said similarity may relate to ML-similarity, given the model. The filtering may be configured to remove artifacts that may have been introduced by the training data synthesizing.

System of Fig. 4 and method of Fig. 7 or similar is applicable to testing phase rather than deployment phase. Thus, for each occurrence of deployment data, or similar, testing data may be used instead herein. Thus, it is testing data that may be filtered herein as in training.

In embodiments, deployment phase may also include a step S750 of modulating the filter operation based on the characteristics of the acquired data. For example, a distance of the measured scene from the camera may be used to modulate the operation of the deployment filter. In particular, objects that are further away from the camera are less aggressively filtered (have lower gain), than those closer to camera, order to assure a consistent level of degradation of detail as described above. In this embodiment, preferably, step S750 may be performed on both, the training data as well as the input data, to so foster similarity in data characteristics. The model may need to be re-trained. However, this may not be needed and the filtering, whilst different in filter strengths, may still be sufficiently similar for present purposes in terms of other characteristics.

A filter modulator may be used to implement this step S750. Such a filter modulator FM is also shown in Fig. 4 above. It may include suitable circuitry that allows interfacing with the camera SD's interface, to obtain the depth information based on which the filter operations is changed/modulated. An RGB-D camera with a dedicated depth measuring channel may be used with benefit for the proposed purpose. Such cameras or camera set-ups that have a separate depth measuring channel may profile a depth profile that assigns a depth or distance from the camera to each measured pixel. The so intercepted depth information may then be applied through suitable interfaces to access and change filter co-efficient of the filter FL for example to so effect modulation. For example, a linear modulation scheme may be used, where the filtering is proportional to the distance measured. Thus, the filtering is proportionally twice as aggressive for distances twice as far as it is for closer objects. Alternatively, the filtering is proportionally less aggressive for distances further away, as it is for closer objects In particular, this optional modulating operation element allows reducing facial details of represented patients/humans in a consistent manner, whether they are closer or more distant to the measuring camera. Modulation schemes other than linear may be used, so long as the effect om the filter coefficients varies with acquisition distance.

The distance between camera and objects of interest during deployment may not be known a priori or may vary over time. Given that objects further away from the camera will appear smaller, the effects of filtering operations performed via static (i.e., not adjusted for distance) filters will degrade the level of details exponentially with distance. This effect can be mitigated by adapting as per the modulator FM, filter characteristics of filter DF to the size of the object, and/or the distance. The said filter characteristics may include the size/dimension of the filter kernel, and such kernel may be adjusted herein, for example proportionally. For example: objects at a larger distance from the camera will appear smaller, so a filter with a smaller kernel size may be applied on those objects.

Low pass filtered images can to some degree be down-scaled or down sampled - i.e., reduced in size in terms of pixels - without causing additional artifacts, as long as the start of the stopband remains below the new sample frequency. This insight may be harnessed herein for better computational efficiency, thus making the overall system performance more responsive. Thus, in embodiments, preprocessing circuitry (not shown) may be used that makes both, training and deployment images/video, smaller prior to use. Using smaller sized versions of the synthetic images/videos speeds up model training, and using smaller deployment images/videos speeds up deployment performance, that is, reduces the compute requirements needed in deployment. This fact may be harnessed herein for synthetic data reliability purposes as addressed herein.

The post-processing of synthetic data and the equivalent pre-processing of deployment data does not have to be limited to low pass filtering. In fact, any transform that removes irrelevant information from and reduces the likelihood of artifacts in the synthetic data, whilst preserving information required to address the problem at hand can be used instead, or in addition. This includes spatial and/or temporal filtering of any kind; removal of color information (i.e., processing only grayscale images), problem-specific non-linear transforms, etc. In some instances, instead of using a low-pass filtering, high pas filtering is used. High and low pass filtering may be used in combination: whilst low pass removes details where it is not needed, high pass may amplify detail (such as borders, edges) in details that are needed.

Whilst the above has been described with reference to certain events, such as the "bed fall events" in clinical or care home setting, this is purely illustrative and not limiting. For example. In in clinical or care home setting there may be other critical but rare events that also need handling automated ML-based surveillance. Other such events may be include an eruption of a brawl or altercation in an A&E (Accident and emergency admission) setting for example. Also, application beyond clinical or care are also envisaged, such as in hospitality settings, retail, etc.

It will be understood that the training phase and deployment phase may be done on the same computing system, on one or more servers or other devices, etc, but may be done also on separate systems, one not related to the other, but possibly communicatively coupled as needed.

The components of system SYS may be implemented as one or more software modules, run on one or more general-purpose processing units, or on a server computer associated, or any other compute device.

Alternatively, some or all components of the system SYS may be arranged in hardware such as a suitably programmed microcontroller or microprocessor, such an FPGA (field-programmable-gate-array) or as a hardwired IC chip, an application specific integrated circuitry (ASIC), integrated into the imaging system SD. In a further embodiment still, the system SYS may be implemented in both, partly in software and partly in hardware.

The different components of the system SYS may be implemented on a single data processing unit. Alternatively, some or more components are implemented on different processing units, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. System (SYS) for image processing, comprising:
an input interface (IN) via which is receivable synthetically generated image training data as intended input for training a machine learning, ML, model (M);
a filter (IF) component capable of applying a filter operation to the synthetically generated image training data to obtained filtered training data;
an output interface (OUT) capable of providing the so filtered training data to a machine learning training system (TS) for training the machine learning model based on the filtered training data.

2. A machine learning training system (TS) capable of training the machine learning model, based on the filtered training data providable by a system of claim 1, in order to obtain a trained machine learning model (M').

3. A machine learning, ML, deployment or testing system (DS), comprising the trained machine leaning model (M) as trainable by a system (TS) of claim 2, the deployment system or testing system (DS) capable of applying deployment/test input data to the trained machine leaning model to obtain deployment/test output data, wherein the deployment/test input data is the result of applying a filter operation by a deployment filter (DF) on raw data, and wherein the said filter operation corresponds to the filter operation appliable the system of claim 1.

4. The system of claim 3, wherein the filtering operations are configured to cause an increased level of image structure similarity between the synthetically generated training data and the deployment/test data.

5. The system of any one of the previous claims, wherein the filtering is one of blurring, down-sampling, low-pass filtering.

6. System of any one of claims 3,4, wherein the deployment/test data includes raw data as video footage acquired by a sensor device (SD) of a scene (SC).

7. System of any one of claims 3-5, wherein the deployment/test data includes a representation of a human face or body pose.

8. The system of any one of the previous claims, wherein a strength of the filtering operation is adapted to a spatial dimension of a human face or other body part, or to a distance of the said face or body part to the sensor device in claim 5.

9. A computing arrangement comprising any two or more of the systems of any one of the previous claims.

10. Method of image processing in support of machine learning, comprising:
receiving (S615) synthetically generated image training data as intended input for training a machine learning, ML, model (M);
applying (S620) filter operation to the synthetically generated image training data to obtained filtered training data;
providing (S625) the so filtered training data to a machine learning training system (TS) for training the machine learning model based on the filtered training data.

11. A method of training a machine learning model, comprising:
receiving (S625') filtered training data providable by method claim 10;
training (630), based on the filtered training data, the machine learning model, by applying a machine learning training algorithm, in order to obtain a trained machine learning model (M').

12. Method of deploying or testing a machine learning model, comprising:
applying (S730) deployment/test input data to the trained machine leaning model as obtainable by method 11 to obtain deployment/test output data,
wherein the said deployment/test input data is the result of applying (S720) a filter operation by a deployment/test filter (DF) on raw data, and wherein the said filter operation correspondable to a filter operation appliable by the method of claim 10.

13. Use of filtered synthetically generated training data for training a model, and then using the model in deployment or testing for processing data previously filtered in a manner that corresponds to the filtering used through which the filtered synthetically generated training data is obtainable.

14. A computer program element, which, when being executed by at least one processing unit, is adapted to cause the processing unit to perform the method as per any one of claims 10-12.

15. At least one computer readable medium having stored thereon the program element of claim 14 or having stored thereon the filtered synthesized data as per claim 1 or 10.
